# EUROPÄISCHE PATENTSCHRIFT

(11) **EP 1 213 244 B1**
(45) Veröffentlichungstag und Bekanntmachung des Hinweises auf die Patenterteilung: **10.08.2005**
(21) Anmeldenummer: 01128080.7
(22) Anmeldetag: 27.11.2001
(51) Int. Cl.: B65G 69/18

(54) **Doppelklappen-Andockvorrichtung**
Dual plate coupling device
Dispositif d'accouplement à deux plaques

(30) Priorität: 30.11.2000 IT LU000007
(43) Veröffentlichungstag der Anmeldung: 12.06.2002
(73) Patentinhaber: SteriValves S.R.L., 55100 Mugnano (Lucca) (IT); Geisenhof, Heinz, 88138 Weissensberg (DE)
(72) Erfinder: Gnesi, Edoardo, 56010 Asciano (PI) (IT); Bellini, Fabrizio, 56019 Filettole (PI) (IT); Nelli, Gianfranco, 55011 Altopascio (LU) (IT); Dovichi, Alfredo, 55060 S.Giusto di Compito (LU) (IT)
(74) Vertreter: Riebling, Peter, Dr.-Ing.

(56) Entgegenhaltungen:
- DE-U- 20 014 872
- US-A- 5 150 735
- US-A- 5 540 266
- US-A- 5 794 647

## Beschreibung

Die Erfindung betrifft eine Doppelklappen-Andockvorrichtung, nach dem Oberbegriff des Patenanspruchs 1, zum Transferieren eines fließfähigen Produkts von einem ersten Behältnis in ein zweites Behältnis.

Derartige Doppelklappen-Andockvorrichtungen werden zum Kuppeln von zwei jeweils einen Anschluss-Rohrstutzen mit im wesentlichen kreisförmigen Querschnitt aufweisenden Behältnissen verwendet. An jedem der Rohrstutzen ist jeweils eine Gehäusehälfte der Doppelklappen-Andockvorrichtung angeordnet. Jede Gehäusehälfte umfasst eine Schließklappe, die einen im wesentlichen kreisförmigen Querschnitt aufweisen und, bezogen auf die Längsmittelachse des Rohrstutzens, um im wesentlichen 90° schwenkbar sind. Hierfür ist ein Schwenkantrieb vorgesehen, durch welchen die Klappen aus einer Schließstellung, in der sie im wesentlichen quer zur Längsmittelachse des Rohrstutzens stehen, in eine Offenstellung, in der sie im wesentlichen parallel zur Längsmittelachse des Rohrstutzens stehen, überführbar sind.

Heutzutage findet man auf dem Markt Doppelklappen-Andockvorrichtungen, die beispielsweise in der chemischen, pharmazeutischen und Nahrungsmittelindustrie zum Abfüllen oder Umfüllen von Produkten verwendet werden, wo Sterilität erforderlich ist, oder wo es notwendig ist, die kontaminierte Oberfläche zu isolieren, oder die Bedienperson und das Produkt während des Abfüllens vor gegenseitigen Kontakt zu schützen. Die Andockvorrichtung besteht aus den beiden oben erwähnten Gehäusehälften, von denen eine Gehäusehälfte an einem ersten Behälter montiert wird und die andere Gehäusehälfte an einem zweiten Behälter. Im getrennten Zustand der Gehäusehälften sind die jeweiligen Schließklappen geschlossen. Eine der Oberflächen jeder Schließklappe ist dem Produkt zugewandt, während die andere Oberfläche der Atmosphäre ausgesetzt ist. Um die beiden Behälter zu verbinden, führt man die Gehäusehälften zusammen, so dass die der Atmosphäre zugewandten Oberflächen der Klappen miteinander in Verbindung kommen.

Eine solche Doppelklappen-Andockvorrichtung ist in der EP-A-0 788 989, der EP-B-0 747 307 und der US-A-5 150 735 beschrieben. Die mit einem Anschluss-Rohrstutzen versehenen Behältnisse können in einer Weise miteinander gekoppelt werden, dass ein in einem Behälter vorhandenes fließfähiges oder streufähiges Produkt in den anderen Behälter überführt werden kann, ohne dass das Produkt mit der Außenatmosphäre in Berührung kommt.
Um dies zu gewährleisten, sind die an jedem Rohrstutzen vorgesehenen Schließklappen so angeordnet, dass sie die Behältnisse in Schließstellung dicht verschließen. Sollen nun die beiden Behältnisse miteinander gekoppelt werden, so werden die jeweiligen Rohrstutzen entsprechend positioniert und die beiden Gehäusehälften der Schließklappen andichtend aneinandergedrückt. Die Schließklappen werden dann als eine Doppelklappen-Einheit um im wesentlichen 90° in ihre Offenstellung gedreht, so dass das Produkt von einem Behälter in den anderen fließen kann. Dabei wirkt der Schwenkantrieb nur auf eine der Schließklappen, im folgenden als aktive Klappe bezeichnet, während die andere, passive Klappe, von der Bewegung der aktiven Klappe mitgenommen wird.

Das Aneinanderdrücken bzw. die Berührung der Oberflächen der beiden Klappen wird nur durch das Verbinden der beiden Gehäusehälften erzielt, weswegen die mechanische Verarbeitung der einzelnen Komponenten wesentlich ausschlaggebend für eine dichte Verbindung ist. In der Praxis entstehen Kontaminierungsprobleme und Andockungsschwierigkeiten. Ein weiteres Hauptproblem ist, daß es zur Zeit kein System gibt, das gewährleistet, dass beide Schließklappen perfekt zusammen bleiben. Dies rührt daher einerseits daher, dass die Klappen fertigungsbedingt nicht vollkommen plan aneinander liegen und andererseits die Dichtungen der Klappen schwimmend gelagert sind, wobei beim Verdrehen der einen, aktiv betätigten Klappe, durch Mitnahme der anderen, passiven Klappe ein Moment entsteht, wodurch die Platten voneinander abheben und das Produkt zwischen die beiden Klappen gelangen kann.

Ferner gibt es immer wieder Dichtigkeitsproblem bei den einzelnen Gehäusehälften, so dass das Produkt aus dem Behälter nach außen dringen bzw. Schmutz in den Behälter eindringen kann.

Die Aufgabe der Erfindung besteht darin eine Doppelklappen-Andockvorrichtung derart zu verbessern, dass eine sehr gute Abdichtung der einzelnen Gehäusehälften und ein guter Verbund der beiden Schließklappen der miteinander verbundenen Gehäusehälften erzielt wird.

Diese Aufgabe wird durch die Merkmale des Patentanspruch 1 gelöst.

Erfindungsgemäß ist in axialer Verlängerung der zusammengefügten Halbwellen jeweils eine Spanneinrichtung vorgesehen, die wahlweise in eine Entriegelungs- und Verriegelungsposition bringbar ist und eine Aufnahme mit schrägen, vorzugsweise konusförmigen Flächen aufweist, welche in Verriegelungsposition die abgeschrägten, vorzugsweise ebenfalls konusförmigen Enden der Halbwellen umschließt und formschlüssig zusammenhält.

Durch die Spanneinrichtungen werden die Schließklappen - in geschlossenem wie in geöffnetem Zustand - beidseitig formschlüssig zusammengespannt. Dadurch wird eine Spaltbildung zwischen den beiden Schließklappen verhindert und es kann kein Produkt eindringen.
Das beschriebene mechanische Verbindungssystem ist nicht abhängig von der Bearbeitungstoleranz der Einzelteile, da die Schließklappen durch Kräfte zusammengehalten werden, die nicht von inneren oder äußeren Wirkungen beeinflusst werden.

In einer bevorzugten Ausgestaltung der Erfindung weist die Spanneinrichtung ein Gehäuse und eine damit fest verbundene Hohlwelle auf, die in durch die Gehäusehälfte gebildete Lagerbuchsen gelagert ist und die Aufnahme für die Enden der Halbwellen ausbildet.
Durch die Hohlwelle ist vorzugsweise eine Antriebswelle geführt, die in eine Aufnahme einer Halbwelle formschlüssig eingreift und ein gemeinsames Schwenken der Schließklappen ermöglicht. Die Antriebswelle wird durch an beiden Seiten in dem Gehäuse fest angeordnete Pneumatikzylinder beaufschlagt, welche eine axiale Stellbewegung des Gehäuses und der Hohlwelle in Bezug auf die Antriebswelle erlauben.
In vorteilhafter Weise ist die Hohlwelle gegenüber der Lagerbuchse mittels eines O-Rings abgedichtet, so dass kein Produkt nach Außen dringen kann.

Eine weitere Ausgestaltung der Erfindung sieht vor, dass die Schließklappen im wesentlichen scheibenförmig ausgebildet sind und einen umlaufenden ballig ausgebildeten Rand aufweisen, der in geschlossener Stellung der Schließklappen an der zugeordneten Dichtung anliegt. Dadurch wird eine hervorragende Dichtwirkung der geschlossenen Klappen erreicht.
In Verbindungsstellung der Gehäusehälften verbleibt zwischen den Schließklappen ein Hohlraum, der über eine Bohrung in einer der Halbwellen zugänglich gemacht werden kann. Über die Bohrung kann ein Vakuum angelegt werden. Das Vakuum hilft zusätzlich die Klappen (spaltfrei) zu verbinden und verhindert, daß die kontaminierte Atmosphäre in den Innenraum kommt und somit bleibt der Innenraum sauber. Alternativ kann in die Bohrung ein Gas oder Druckluft eingeblasen werden, wodurch einem Eindringen des Produkts in den Spalt entgegengewirkt wird.

Zur Verbindung der Gehäusehälften sind an einer Gehäusehälfte mehrere Zentrierbolzen angeordnet. Die Zentrierbolzen sind bezüglich der Längsmittelachse der Gehäusehälfte unsymmetrisch angeordnet und greifen in Verbindungsstellung der Andockvorrichtung in entsprechende Aufnahmebohrungen der anderen Gehäusehälfte ein. Die Zentrierbolzen werden durch einen drehbar an der anderen Gehäusehälfte gelagerten Verschlussring nach Art eines Bajonettverschlusses verriegelt, wobei der Verschlussring über seinen Umfang verteilte Schrägflächen aufweist, die mit in den Zentrierbolzen vorgesehenen Nuten zusammenwirkten.

Jede Gehäusehälfte kann durch eine Abdeckung geschützt werden, die mit der jeweiligen Gehäusehälfte fest verbindbar ist. Die Abdeckung kann derart ausgeführt werden, dass in montiertem Zustand eine druckfeste (mindestens 3 bar) Klappe für Druckbehälter erreicht wird. Auch kann die Klappe bei montierter Abdeckung nicht mehr betätigt werden.

Ein Ausführungsbeispiel der Erfindung wird nun anhand der Zeichnungsfiguren erläutert. Es zeigen:
- Figur 1:: einen seitlichen Schnitt durch die DoppelklappenAndockvorrichtung mit verbundenen Gehäusehälften entlang der Linie I-I in Figur 2;
- Figur 2:: eine Draufsicht auf die Doppelklappen-Andockvorrichtung gemäß Figur 1 in verriegelter Stellung;
- Figur 3:: einen seitlichen Schnitt durch die DoppelklappenAndockvorrichtung mit getrennten und an Behältern befestigten Gehäusehälften vor dem Andocken;
- Figur 4:: einen seitlichen Schnitt durch die DoppelklappenAndockvorrichtung gemäß Figur 3 während der Andockphase;
- Figur 5:: eine Draufsicht auf die Doppelklappen-Andockvorrichtung gemäß Figur 4 während des Verriegelns der Gehäusehälften;
- Figur 6:: eine Draufsicht auf die Doppelklappen-Andockvorrichtung gemäß Figur 5 mit verriegelten Gehäusehälften;
- Figur 7:: eine Schnitt durch die Spanneinrichtung für die Schließklappen vor dem Verriegeln;
- Figur 8:: eine Schnitt durch die Spanneinrichtung für die Schließklappen nach dem Verriegeln;
- Figur 9:: einen seitlichen Schnitt durch die DoppelklappenAndockvorrichtung mit verriegelten Gehäusehälften und geöffneter Doppelklappe;
- Figur 10:: die Abdeckung für die passive Gehäusehälfte in Draufsicht;
- Figur 11:: die Abdeckung gemäß Figur 7 im Schnitt;
- Figur 12:: die Abdeckung in perspektivischer Ansicht;
- Figur 13:: die Abdeckung für die aktive Gehäusehälfte in Draufsicht;
- Figur 14:: die Abdeckung gemäß Figur 10 im Schnitt.

### Detaillierte Beschreibung:

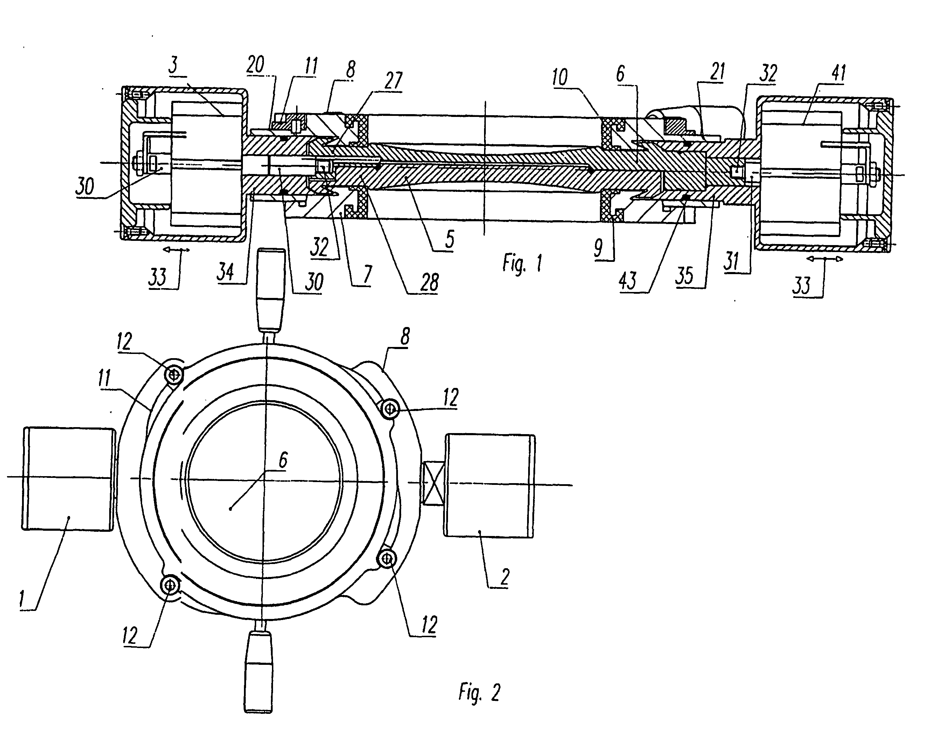

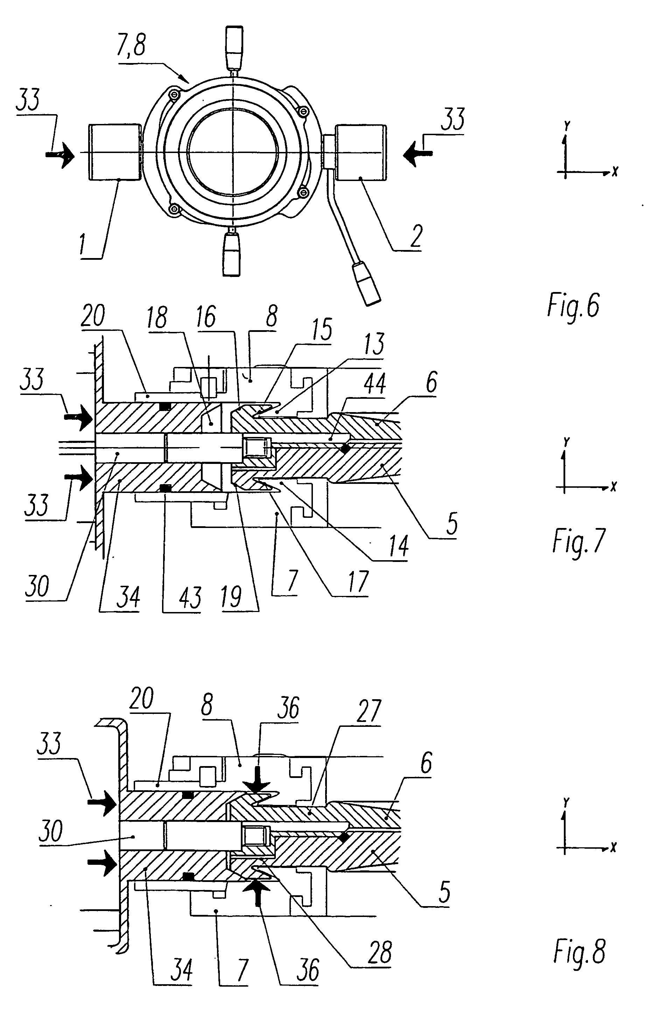

Wie man in den Figuren 1 und 2 in Verbindung mit Figur 7 erkennt, besteht die Doppelklappen-Andockvorrichtung im wesentlichen aus zwei Teilen, einem Aktivteil 8 mit einer aktiv antreibbaren Schließklappe 6 und einem Passivteil 7 mit einer passiv von der aktiven Schließklappe 6 mitgenommenen Schließklappe 5.

### Aktivteil

Das Wort "Aktiv" bezieht sich auf die antreibende Schließklappe 6. Dieses Teil ist mit einem Handhebel oder Antrieb für das manuelle oder automatische Öffnen und Schließen der Schließklappe ausgerüstet.

Das Aktivteil umfasst eine Gehäusehälfte 8, die mit einem Behälter 22 bzw. dessen Anschluss-Rohrstutzen verbunden werden kann. Die Gehäusehälfte 8 ist mit Schwalbenschwanzführungen 13 ausgerüstet, in welchen die aktive Schließklappe 6 drehbar gelagert ist. Hierfür umfasst die Schließklappe 6 eine halbrunde Welle, die nachfolgend als Halbwelle 27 bezeichnet wird, die eine Schwalbenschwanznut 15 aufweist und in der Schwalbenschwanzführung 13 drehbar gehalten ist. Die Gehäusehälfte 8 weist eine umlaufende ringförmige Dichtung 10 auf, die das Gehäuseteil gegenüber dem Behälter 22 bzw. dessen Anschluss-Rohrstutzen abdichtet. Die Dichtung 10 garantiert außerdem die Dichtigkeit zwischen Aktiv- und Passivteil, sowie zwischen der Gehäusehälfte und der Schließklappe und ist im Querschnitt im wesentlichen C-förmig ausgebildet.

Im oberen Bereich umfasst die Gehäusehälfte 8 einen Verschlussmechanismus 11, der zur kraftschlüssigen Verbindung der beiden Gehäusehälften 8; 7 dient. Der Verschlussmechanismus 11 ist als Bajonettverschluss ausgebildet, der mit zugeordneten Zentrierbolzen 12 der anderen Gehäusehälfte 7 zusammenwirkt. Dies wird weiter unten ausführlich erläutert.

Die Halbwelle 27 ist an ihren Enden als halber Kegelstumpf 16 (halbkonisch) ausgebildet. Die Halbwelle ist jedoch nicht nach Außen durchgeführt, sondern endet beidseitig als Vollwelle bzw. -hülse. Diese umfasst einen Innenvierkant, der zur Verbindung mit einer Antriebswelle 31, 32 dient. Über die Antriebswelle 31, 32 wird die aktive Schließklappe 6 angetrieben.

Die Spanneinrichtungen zur Verriegelung der beiden Schließklappen 5; 6 sind axial auf den Antriebswellen 30, 31 und in den Lagerbuchsen 20, 21 in Pfeilrichtung 33 verschiebbar geführt. Jede Spanneinrichtung umfasst im wesentlichen ein Gehäuse 1 bzw. 2 , in welchem ein pneumatischer Zylinder 3 bzw. 4 angeordnet ist, und eine mit dem Gehäuse fest verbundene Hohlwelle 34, 35. Die Kolben der Pneumatikzylinder werden durch die Antriebswellen 30 bzw. 31 gebildet, die durch die Hohlwellen 34, 35 hindurch verlaufen. Die jeweiligen Hohlwellen 34, 35 sind in zugeordneten Lagerbuchsen 20, 21 gelagert, die Teil der Gehäusehälften 1, 2 sind. Die Hohlwellen 34, 35 sind gegenüber der zugeordneten Lagerbuchse 20, 21 mittels eines O-Rings 43 abgedichtet. An ihren Enden bilden die Hohlwellen 34, 35 jeweils einen konkaven Kegelstumpf 18 aus.

### Passivteil

Das Passivteil umfasst ebenfalls eine Gehäusehälfte 7, die mit einem zweiten Behälter 23 bzw. dessen Anschluss-Rohrstutzen verbunden werden kann. Die Gehäusehälfte 7 ist mit Schwalbenschwanzführungen 14 ausgerüstet, in welchen die passive Schließklappe 5 drehbar gelagert ist. Hierfür umfasst die Schließklappe 5 eine halbrunde Welle, die nachfolgend als Halbwelle 28 bezeichnet wird, die eine Schwalbenschwanznut 17 aufweist und in der Schwalbenschwanzführung 14 drehbar gehalten ist. Die Gehäusehälfte 7 weist ebenfalls eine umlaufende ringförmige Dichtung 9 auf, die das Gehäuseteil 7 gegenüber dem zweiten Behälter bzw. dessen Anschluss-Rohrstutzen abdichtet. Die Dichtung garantiert ferner die Dichtigkeit zwischen Aktiv- und Passivteil, sowie zwischen der Gehäusehälfte und der Schließklappe und ist im Querschnitt im wesentlichen C-förmig ausgebildet.
Die Halbwelle 28 ist an ihren Enden als halber Kegelstumpf 19 (halbkonisch) ausgebildet.

Die passive Gehäusehälfte 7 ist des weiteren mit Zentrierbolzen 12 für das Andocken und Verriegeln an der aktiven Gehäusehälfte 8 versehen. Die Zentrierbolzen 12 sind bezogen auf die Längsmittelachse der Gehäusehälfte 7 unsymmetrisch angeordnet, wodurch ein falsches Zusammenfügen der Gehäusehälften verhindert wird.

In verriegeltem Zustand der beiden Gehäusehälften fallen die Halbwellen 27, 28 der beiden Schließklappen 5, 6 zu einer gemeinsamen Welle 29 zusammen. Die Kegelstumpfhälften 16, 19 der Halbwellen ergänzen sich zu einem ganzen Kegelstumpf.

### Funktionsweise der Doppelklappen Andockvorrichtung

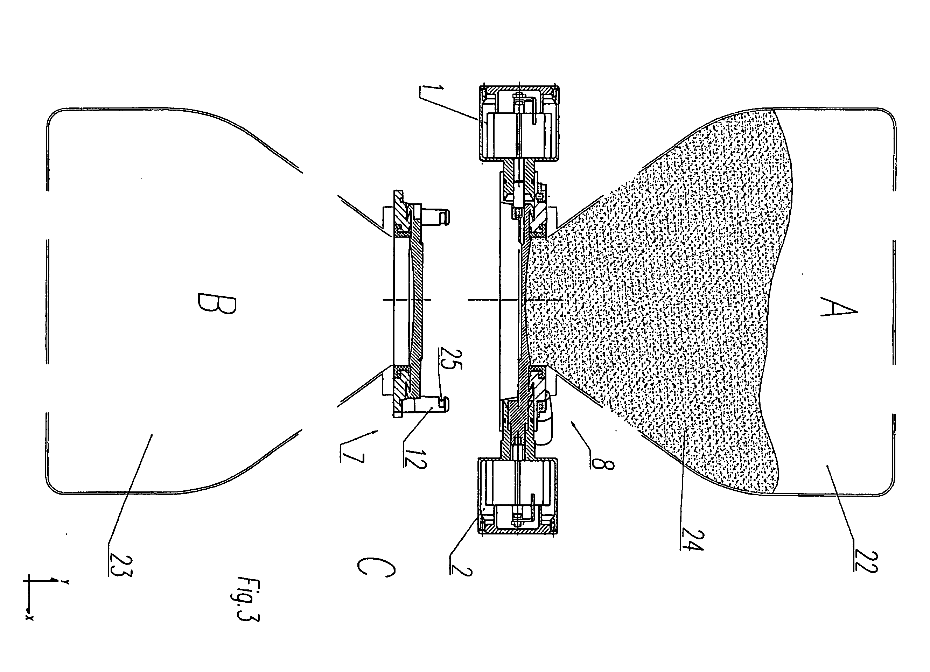

Im Ausgangszustand gemäß Figur 3 sind die Gehäusehälften 8 bzw. 7 getrennt voneinander mit jeweils einem Anschluss-Rohrstutzen eines zugeordneten Behälters 22 bzw. 23 verbunden. Die Schließklappen 6, 5 sind geschlossen und dichten die Behälter 22, 23 gegenüber der Außenatmosphäre ab. Im oberem Behälter 22 ist ein Produkt enthalten, das mittels der Doppelklappen-Andockvorrichtung in den unteren Behälter 23 umgefüllt werden soll.

Der Behälter 23 mit der passiven Gehäusehälfte 7 wird dazu an den Behälter 23 mit der aktiven Gehäusehälfte 8 herangeführt und derart unterhalb der Gehäusehälfte 8 angeordnet, dass die Längsachsen der beiden Gehäuseteile 7, 8 übereinstimmen.

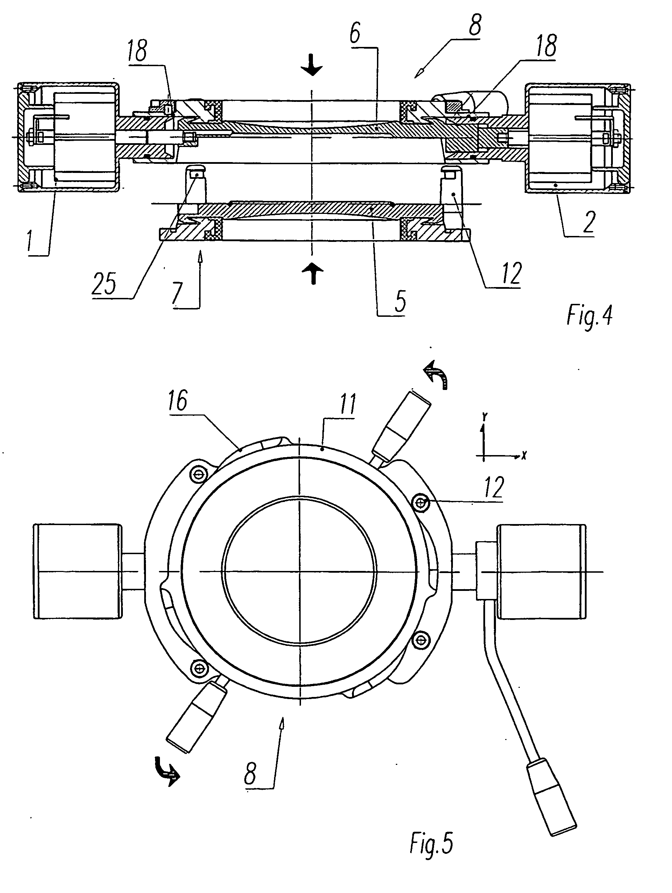

Wie man aus Figur 4 erkennt, erfolgt die Ankopplung zwischen aktiver und passiver Gehäusehälfte 8, 7 derart, dass die Zentrierbolzen 12 des Passivteils 7 in zugeordnete Bohrungen (Führungen) des aktiven Gehäuseteils 8 bis zum Anschlag eingeführt werden. Die Zentrierbolzen 12 stehen dann ein Stück über den oberen Rand des aktiven Gehäuseteil 8 hinaus.

Die Verriegelung der beiden Gehäusehälften 7, 8 ist in Figur 5 dargestellt. Dazu wird das Verriegelungselement 11 von einer Bedienperson gedreht. Dies erfolgt mit Hilfe von Hebeln, die am Verriegelungselement 11 angeordnet sind. Die am Verriegelungselement 11 angeordneten Schrägflächen 26 greifen in entsprechende Nuten 25 der Zentrierbolzen 12 ein und es erfolgt eine Verbindung nach Art eines Bajonettverschlusses. Auf diese Weise wird die Aktivhälfte 8 abdichtend mit der Passivhälfte 7 verbunden, wobei die beiden Gehäusehälften 7, 8 zusammengepresst werden.

Als nächster Schritt folgt die Verriegelung der beiden Schließklappen untereinander. Dies ist in den Figuren 6 bis 8 dargestellt. Die beiden Schließklappen 5, 6 liegen aneinander, wobei die beiden Halbwellen 27, 28 zusammenfallen und eine einzige Welle 29 bilden.

Die beiden Gehäuse 1, 2 der Spanneinrichtungen sind verschiebbar auf den Antriebswellen 30, 31 gelagert. Die Enden der Antriebswellen 30, 31 sind im Vierkant 32 der Welle 29 aufgenommen. Aufgrund der Wirkung der Kurzhubzylinder 3 bzw. 4 bewegen sich die Gehäuse 1, 2 und damit auch die Hohlwellen 34, 35 auf der X-Achse in Richtung der Welle 29. Die konkaven Kegelstümpfe 18 der Hohlwellen 34, 35 umschließen die konvexe Oberfläche der Kegelstümpfe 16, 19 der Halbwellen 34, 35 der verbundenen Schließklappen, wandeln die Axialkraft in eine radiale Komponente 36 (Kraft) Y um und halten die beiden Schließklappen 5, 6 gepresst aneinander.

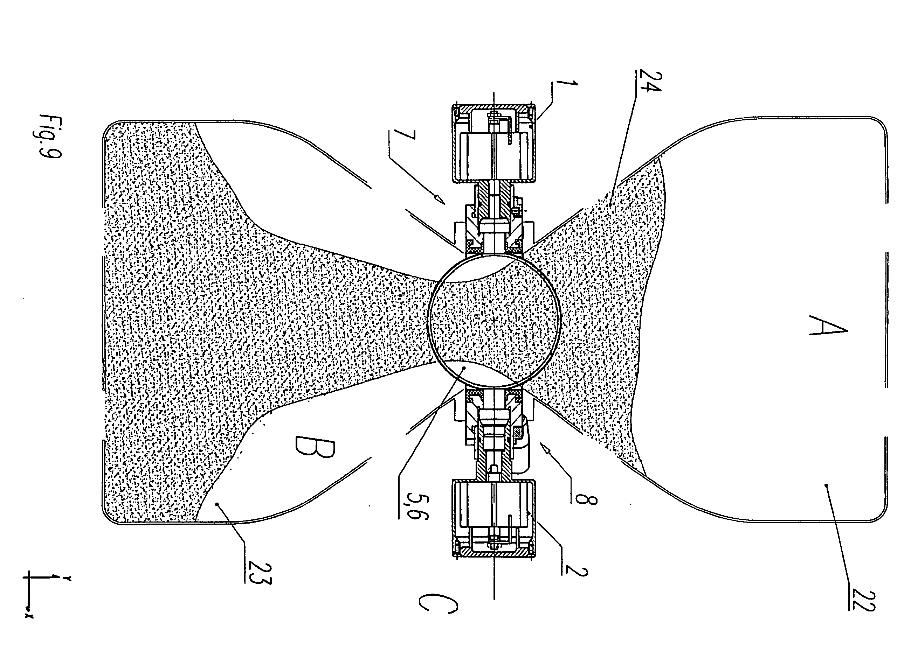

In Figur 9 sind sowohl die beiden Gehäusehälften 7, 8 als auch die Schließklappen 5, 6 fest miteinander verbunden. Die verbundenen Schließklappen 5, 6 können nun geöffnet werden. Das Produkt kann vom oberen Behälter 22 in den unteren Behälter 23 umgefüllt werden. Die Verbindung der beiden Schließklappen 5, 6 durch die Spanneinrichtungen wirkt kontinuierlich auch während der Drehbewegung beim Öffnen oder Schließen der Klappen.

Die Entriegelung der Schließklappen 5, 6 und nachfolgende Entriegelung der Gehäusehälften 7, 8 kann erst erfolgen, wenn die Schließklappen wieder fest geschlossen sind. Die Entriegelungsvorgänge verlaufen in umgekehrter Reihenfolge, wie oben beschrieben.

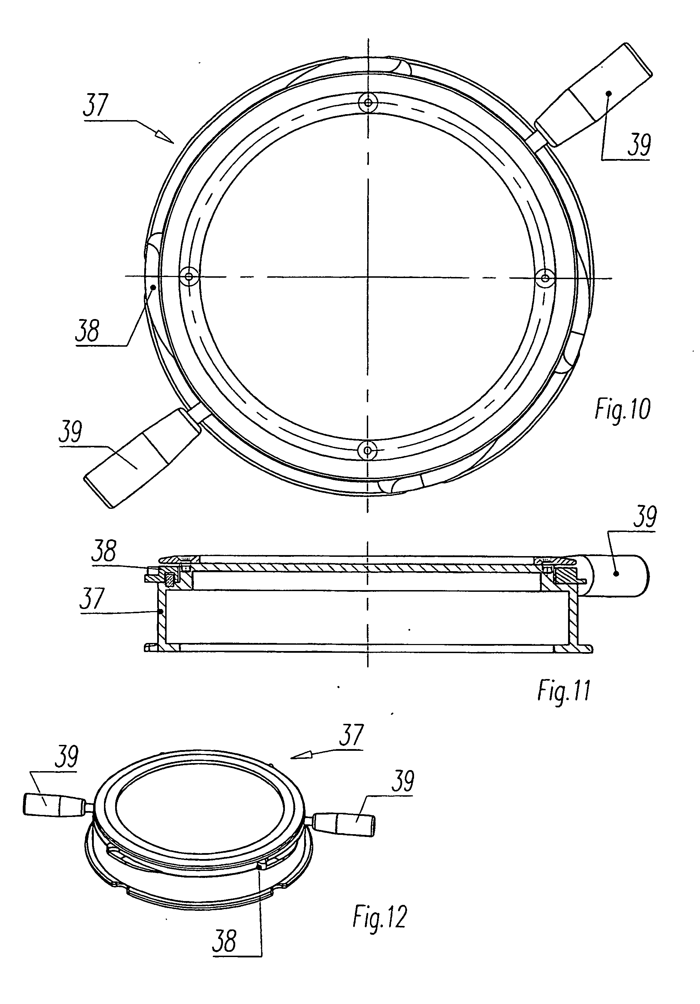

Die Figuren 10 bis 12 zeigen eine Abdeckung 37 zum Schutz der passiven Gehäusehälfte 7. Die Abdeckung 37 umfasst ein etwa topfförmiges Gehäuse 38, welches derart ausgebildet ist, dass es die passive Gehäusehälfte 7 größtenteils umschließt. Das Gehäuse der Abdeckung 37 umfasst ferner Bohrungen (nicht dargestellt) zur Aufnahme der Zentrierbolzen 12 der passiven Gehäusehälfte 7.
Im oberen Bereich der Abdeckung 37 ist ein Verschlussmechanismus 38 vorgesehen, der im wesentlichen identisch mit dem Verschlussring 11 der aktiven Gehäusehälfte 8 ausgebildet ist und nach Art eines Bajonettverschlusses arbeitet. Mittels des Verschlussmechanismus 38, der über zwei Hebel 39 bedient wird, wird die Abdeckung 37 fest mit der passiven Gehäusehälfte 7 verbunden. Damit wird ein Verschmutzen der passiven Gehäusehälfte bzw. ein Verschmutzen und unbeabsichtigtes Öffnen der passiven Schließklappe 5 verhindert.

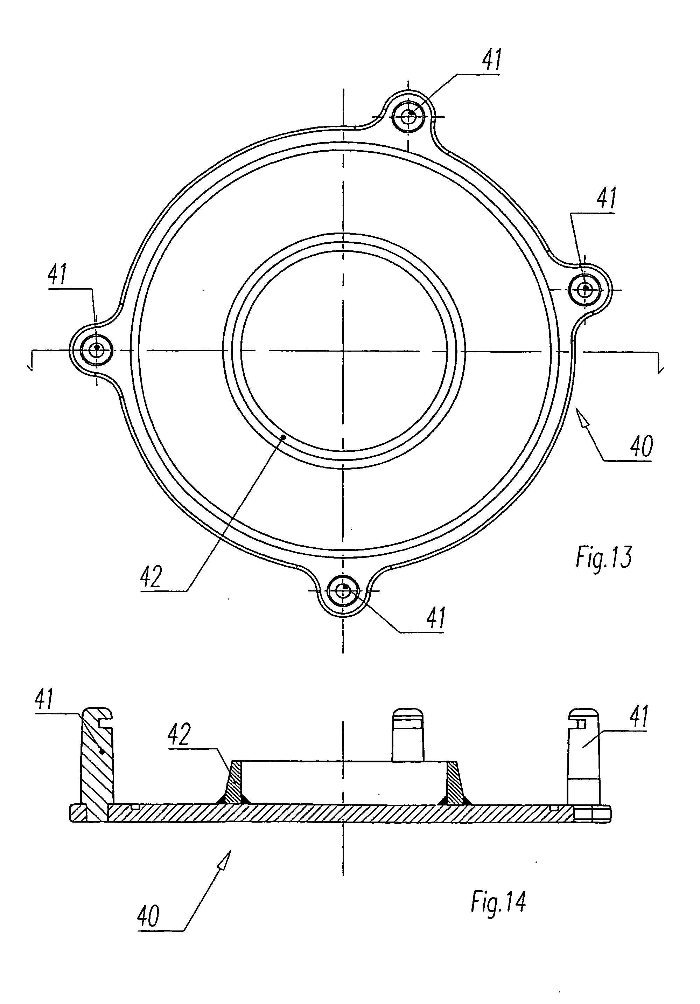

In den Figuren 13 und 14 ist eine Abdeckung 40 zum Schutz der aktiven Gehäusehälfte 8 gegen Verschmutzung gezeigt. Die Abdeckung ist etwa scheibenförmig ausgebildet und umfasst mehrere Zentrierbolzen 41, die in Anzahl und Anordnung den Zentrierbolzen 12 der passiven Gehäusehälfte 7 entsprechen. Die Zentrierbolzen 41 werden in den entsprechenden Aufnahmen der aktiven Gehäusehälfte 8 aufgenommen und können mit dem vorhandenen Verriegelungsmechanismus 11 der aktiven Gehäusehälfte 8 verriegelt werden. Die Abdeckung 40 weist ferner einen im wesentlichen zentrischen ringförmigen Flansch 42 auf. Der Flansch 42 ist derart ausgebildet, dass er auf die aktive Schließklappe 6 drückt, sobald die Abdeckung 40 mit der aktiven Gehäusehälfte 8 verbundenen ist. Dadurch wird verhindert, dass die aktive Schließklappe 6 unbeabsichtigt geöffnet werden kann.

### Bezugszeichenliste

- 1: Spanneinrichtung
- 2: Spanneinrichtung
- 3: Pneumatikzylinder
- 4: Pneumatikzylinder
- 5: Verschlussklappe (passiv)
- 6: Verschlussklappe (aktiv)
- 7: Gehäusehälfte (Passivteil)
- 8: Gehäusehälfte (Aktivteil)
- 9: Dichtung (Passivteil)
- 10: Dichtung (Aktivteil)
- 11: Verschlussring
- 12: Zentrierbolzen
- 13: Schwalbenschwanzführung
- 14: Schwalbenschwanzführung
- 15: Schwalbenschwanznut
- 16: Kegelstumpfhälfte (konvex)
- 17: Schwalbenschwanznut
- 18: Kegelstumpf (konkav)
- 19: Kegelstumpfhälfte (konvex)
- 20: Lagerbuchse
- 21: Lagerbuchse
- 22: Behälter
- 23: Behälter
- 24: Produkt
- 25: Nut (Bolzen)
- 26: Schrägfläche
- 27: Halbwelle
- 28: Halbwelle
- 29: Welle
- 30: Antriebswelle
- 31: Innenvierkant
- 32: Innenvierkant
- 33: Pfeilrichtung
- 34: Hohlwelle
- 35: Hohlwelle
- 36: radiale Kraftkomponente
- 37: Abdeckung
- 38: Verschlussring
- 39: Hebel
- 40: Abdeckung
- 41: Zentrierbolzen
- 42: Flansch
- 43: O-Ring
- 44: Bohrung

## Patentansprüche

1. Doppelklappen-Andockvorrichtung zum Transferieren eines fließfähigen Produkts (24) von einem ersten Behältnis (22) in ein zweites Behältnis (23), mit zwei Gehäusehälften (7; 8), die lösbar miteinander zu verbinden sind, jeweils einer Schließklappe (5; 6) pro Gehäusehälfte, die mittels einer Halbwelle (28; 27) schwenkbar in der zugeordneten Gehäusehälfte (7; 8) gelagert ist, wobei in Verbindungsstellung der Andockvorrichtung die Gehäusehälften (7; 8) und die Schließklappen (5; 6) aneinander anliegen und die Halbwellen (28; 27) der beiden Schließklappen zu einer gemeinsamen Welle (29) zusammenfallen, so dass beide Schließklappen über die gemeinsame Welle (29) wahlweise zwischen einer Schließstellung und einer Offenstellung schwenkbar sind,
**dadurch gekennzeichnet,**
**dass** in axialer Verlängerung der zusammengefügten Halbwellen (28; 27) jeweils eine Spanneinrichtung (1,3; 2, 4) vorgesehen ist, die wahlweise in eine Entriegelungs- und Verriegelungsposition bringbar ist und Aufnahmen (18) aufweist, welche in Verriegelungsposition die jeweiligen Enden der Halbwellen (28; 27) zumindest teilweise umschließen und formschlüssig zusammenhalten.

2. Doppelklappen-Andockvorrichtung nach Anspruch 1, **dadurch gekennzeichnet, dass** die Aufnahmen (18) und die Enden der Halbwellen (28,27) jeweils konusförmig abgeschrägt sind.

3. Doppelklappen-Andockvorrichtung nach einem der vorhergehenden Ansprüche, **dadurch gekennzeichnet, dass** die Spanneinrichtung ein Gehäuse (1; 2) und eine damit fest verbundene Hohlwelle (34; 35) aufweist, die in durch die Gehäusehälfte (8) gebildete Lagerbuchsen (20; 21) gelagert ist und eine Aufnahme (18) ausbildet.

4. Doppelklappen-Andockvorrichtung nach einem der vorhergehenden Ansprüche, **dadurch gekennzeichnet, dass** durch die Hohlwelle (34; 35) eine Antriebswelle (30; 31) geführt ist, die in eine Aufnahme (32) einer Halbwelle formschlüssig eingreift und ein gemeinsames Schwenken der Schließklappen (5; 6) ermöglicht.

5. Doppelklappen-Andockvorrichtung nach einem der vorhergehenden Ansprüche, **dadurch gekennzeichnet, dass** die Antriebswelle (30; 31) durch einen in dem Gehäuse (1; 2) fest angeordneten Pneumatikzylinder (3; 4) beaufschlagt wird, welcher eine axiale Stellbewegung des Gehäuses (1; 2) und der Hohlwelle (34; 35) in Richtung (33) in Bezug auf die Antriebswelle erlaubt.

6. Doppelklappen-Andockvorrichtung nach einem der vorhergehenden Ansprüche, **dadurch gekennzeichnet, dass** die Hohlwelle (34; 35) gegenüber der Lagerbuchse (20; 21) mittels eines O-Rings (43) abgedichtet ist.

7. Doppelklappen-Andockvorrichtung nach einem der vorhergehenden Ansprüche, **dadurch gekennzeichnet, dass** die Schließklappen (5; 6) im wesentlichen scheibenförmig ausgebildet sind und einen umlaufenden, ballig ausgebildeten Rand aufweisen, der in geschlossener Stellung der Schließklappen an der zugeordneten Dichtung (9, 10) anliegt.

8. Doppelklappen-Andockvorrichtung nach einem der vorhergehenden Ansprüche, **dadurch gekennzeichnet, dass** in Verbindungsstellung der Gehäusehälften (7; 8) zwischen den Schließklappen (5; 6) ein Hohlraum verbleibt, der über eine Bohrung (44) in einer der Halbwellen (27; 28) zugänglich ist.

9. Doppelklappen-Andockvorrichtung nach einem der vorhergehenden Ansprüche, **dadurch gekennzeichnet, dass** eine Gehäusehälfte (7) mehrere Zentrierbolzen (12) aufweist, die bezüglich der Längsmittelachse der Gehäusehälfte (7) unsymmetrisch angeordnet sind und in Verbindungsstellung der Andockvorrichtung in entsprechenden Aufnahmebohrungen der anderen Gehäusehälfte (8) eingreifen.

10. Doppelklappen-Andockvorrichtung nach einem der vorhergehenden Ansprüche, **dadurch gekennzeichnet, dass** die Zentrierbolzen (12) durch einen drehbar gelagerten Verschlussring (11) nach Art eines Bajonettverschlusses in der anderen Gehäusehälfte (8) verriegelbar sind.

11. Doppelklappen-Andockvorrichtung nach einem der vorhergehenden Ansprüche, **dadurch gekennzeichnet, dass** der Verschlussring (11) über seinen Umfang verteilte Schrägflächen (26) aufweist, die mit in den Zentrierbolzen (12) vorgesehenen Nuten (25) zusammenwirkten.

12. Doppelklappen-Andockvorrichtung nach einem der vorhergehenden Ansprüche, **dadurch gekennzeichnet, dass** jeder Gehäusehälfte (7; 8) eine Abdeckung (37; 40) zugeordnet ist, welche mit der jeweiligen Gehäusehälfte fest verbindbar ist.

13. Doppelklappen-Andockvorrichtung nach einem der vorhergehenden Ansprüche, **dadurch gekennzeichnet, dass** die Abdeckung (37; 40) derart ausgeführt werden, dass in montiertem Zustand eine druckfeste Anordnung für Druckbehälter erreicht wird, wobei die Anordnung bei montierter Abdeckung nicht mehr betätigt werden kann.

## Claims

1. Dual valve coupling device for transferring a free-flowing product (24) from a first container (22) into a second container (23), comprising two housing halves (7; 8), which are detachably connected to one another, with one respective closing valve (5; 6) per housing half, which is pivotally mounted in the associated housing half (7; 8) by means of a half shaft (28; 27), wherein in the connecting position of the coupling device, the housing halves (7; 8) and the closing valves (5; 6) rest on one another and the half shafts (28; 27) of the two closing valves coincide to form a common shaft (29), with the result that the two closing valves can be pivoted over the common shaft (29), selectively between a closing position and an open position, **characterised in that** a respective fixing mechanism (1, 3; 2, 4) is provided in the axial extension of the joined half shafts (28; 27) and can be brought selectively into an unlocking and locking position and has receivers (18) which, in the locking position, at least partially enclose the respective ends of the half shafts (28; 27) and hold them together with interlocking fit.

2. Dual valve coupling device according to claim 1, **characterised in that** the receivers (18) and the ends of the half shafts (28, 27) are conically bevelled in each case.

3. Dual valve coupling device according to any one of the preceding claims, **characterised in that** the fixing mechanism has a housing (1; 2) and a hollow shaft (34; 35) rigidly connected thereto, which is mounted in bearing bushes (20; 21) formed by the housing half (8) and forms a receiver (18).

4. Dual valve coupling device according to any one of the preceding claims, **characterised in that** a drive shaft (30; 31) is guided through the hollow shaft (34; 35), the drive shaft engaging with interlocking fit in a receiver (32) of a half shaft and allowing common pivoting of the closing valves (5; 6).

5. Dual valve coupling device according to any one of the preceding claims, **characterised in that** the drive shaft (30; 31) is loaded by a pneumatic cylinder (3; 4) rigidly arranged in the housing (1; 2), which pneumatic cylinder allows an axial setting movement of the housing (1; 2) and the hollow shaft (34; 35) in the direction (33) with respect to the drive shaft.

6. Dual valve coupling device according to any one of the preceding claims, **characterised in that** the hollow shaft (34; 35) is sealed by means of an O-ring (43) relative to the bearing bush (20; 21).

7. Dual valve coupling device according to any one of the preceding claims, **characterised in that** the closing valves (5; 6) are substantially disc-shaped and have a peripheral crowned edge, which in the closed position of the closing valves rests on the associated seal (9, 10).

8. Dual valve coupling device according to any one of the preceding claims, **characterised in that**, in the connecting position of the housing halves (7; 8), a hollow space remains between the closing valves (5; 6) and is accessible via a hole (44) in one of the half shafts (27; 28).

9. Dual valve coupling device according to any one of the preceding claims, **characterised in that** one housing half (7) has a plurality of centring pins (12), which are arranged asymmetrically with regard to the longitudinal centre line of the housing half (7) and, in the connecting position of the coupling device, engage in corresponding receiving holes of the other housing half (8).

10. Dual valve coupling device according to any one of the preceding claims, **characterised in that** the centring pins (12) can be locked by a rotatably mounted closure ring (11) in the manner of a bayonet lock in the other housing half (8).

11. Dual valve coupling device according to any one of the preceding claims, **characterised in that** the closure ring (11) has oblique faces (26) distributed over its periphery, which cooperate with grooves (25) provided in the centring pins (12).

12. Dual valve coupling device according to any one of the preceding claims, **characterised in that** a cover (37; 40), is associated with each housing half (7; 8) which cover can be rigidly connected to the respective housing half.

13. Dual valve coupling device according to any one of the preceding claims, **characterised in that** the cover (37; 40) is designed in such a way that, in the fitted state, a pressure-proof arrangement is achieved for pressure containers, wherein the arrangement can no longer be actuated when the cover is fitted.

## Revendications

1. Dispositif d'accouplement à deux clapets pour transférer un produit fluide (24) d'un premier récipient (22) dans un second récipient (23), avec deux moitiés d'enveloppe (7 ; 8) qui peuvent être reliées de manière amovible, et pour chaque moitié d'enveloppe un clapet de fermeture (5 ; 6) qui est monté pivotant dans ladite moitié d'enveloppe (7 ; 8) à l'aide d'un demi-axe (28 ; 27), étant précisé que dans la position de liaison du dispositif d'accouplement, les moitiés d'enveloppe (7 ; 8) et les clapets de fermeture (5 ; 6) sont appliqués les uns contre les autres et que les demi-axes (28 ; 27) des deux clapets de fermeture coïncident pour former un axe commun (29), de sorte que les deux clapets sont aptes à pivoter sélectivement entre une position ouverte et une position fermée, par l'intermédiaire de l'axe commun (29),
**caractérisé en ce** ce qu'il est prévu dans le prolongement axial des demi-arbres (28 ; 27) assemblés des dispositifs de serrage respectifs (1, 3 ; 2, 4) aptes à être amenés sélectivement dans une position de déverrouillage et dans une position de verrouillage et présentant des logements (18) qui, dans la position de verrouillage, entourent au moins partiellement les extrémités des demi-axes (28 ; 27) et les réunissent par complémentarité de forme.

2. Dispositif d'accouplement à deux clapets selon la revendication 1, **caractérisé en ce que** les logements (18) et les extrémités des demi-axes (28, 27) ont une forme biseautée conique.

3. Dispositif d'accouplement à deux clapets selon l'une des revendications précédentes, **caractérisé en ce que** le dispositif de serrage comporte une enveloppe (1 ; 2) et un arbre creux (34 ; 35) qui est solidaire de celle-ci, qui est monté dans des coussinets (20 ; 21) formés par la moitié d'enveloppe (8) et qui forme un logement (18).

4. Dispositif d'accouplement à deux clapets selon l'une des revendications précédentes, **caractérisé en ce que** l'arbre creux (34 ; 35) est traversé par un arbre d'entraînement (30 ; 31) qui pénètre par complémentarité de forme dans un logement (32) d'un demi-arbre et qui permet un pivotement commun des clapets de fermeture (5 ; 6).

5. Dispositif d'accouplement à deux clapets selon l'une des revendications précédentes, **caractérisé en ce que** l'arbre d'entraînement (30 ; 31) est contraint par un cylindre pneumatique (3 ; 4) qui est disposé, fixe, dans l'enveloppe (1 ; 2) et qui permet un mouvement de réglage axial de l'enveloppe (1 ; 2) et de l'arbre creux (34 ; 35) dans le sens (33) par rapport à l'arbre d'entraînement.

6. Dispositif d'accouplement à deux clapets selon l'une des revendications précédentes, **caractérisé en ce que** l'arbre creux (34 ; 35) est rendu étanche par rapport au coussinet (20 ; 21) à l'aide d'un joint torique (43).

7. Dispositif d'accouplement à deux clapets selon l'une des revendications précédentes, **caractérisé en ce que** les clapets de fermeture (5 ; 6) ont sensiblement la forme de plaques et présentent un bord périphérique bombé qui est appliqué, dans la position fermée des clapets de fermeture, contre le joint d'étanchéité associé (9, 10).

8. Dispositif d'accouplement à deux clapets selon l'une des revendications précédentes, **caractérisé en ce que** dans la position de liaison des moitiés d'enveloppe (7 ; 8), il reste entre les clapets de fermeture (5 ; 6) une cavité qui est accessible par l'intermédiaire d'un perçage (44) prévu dans l'un des demi-arbres (27 ; 28).

9. Dispositif d'accouplement à deux clapets selon l'une des revendications précédentes, **caractérisé en ce qu'**une moitié d'enveloppe (7) présente plusieurs tiges de centrage (12) qui sont disposées de manière asymétrique par rapport à l'axe médian longitudinal de la moitié d'enveloppe (7) et qui pénètrent, dans la position de liaison du dispositif d'accouplement, dans des perçages de logement correspondants de l'autre moitié d'enveloppe (8).

10. Dispositif d'accouplement à deux clapets selon l'une des revendications précédentes, **caractérisé en ce que** les tiges de centrage (12) sont aptes à être verrouillées dans l'autre moitié d'enveloppe (8) à la manière d'une fermeture à baïonnette, à l'aide d'une bague de fermeture (11) montée rotative.

11. Dispositif d'accouplement à deux clapets selon l'une des revendications précédentes, **caractérisé en ce que** la bague de fermeture (11) présente, réparties sur sa circonférence, des surfaces biseautées (26) qui coopèrent avec des rainures (25) prévues dans les tiges de centrage (12).

12. Dispositif d'accouplement à deux clapets selon l'une des revendications précédentes, **caractérisé en ce qu'**il est prévu, associé à chaque moitié d'enveloppe (7 ; 8), un recouvrement (37 ; 40) qui est apte à être relié solidement à ladite moitié d'enveloppe.

13. Dispositif d'accouplement à deux clapets selon l'une des revendications précédentes, **caractérisé en ce que** le recouvrement (37 ; 40) est réalisé de telle sorte qu'on obtienne, en position montée, un agencement résistant à la pression pour des récipients sous pression, l'agencement ne pouvant plus être actionné quand le recouvrement est monté.
